# EUROPEAN PATENT APPLICATION

(11) **EP 1 410 943 A2**
(43) Date of publication of application: **21.04.2004**
(21) Application number: 03023521.2
(22) Date of filing: 15.10.2003
(51) Int. Cl.: B60L 15/20

(54) **Electric vehicle**

(30) Priority: 15.10.2002 JP 2002301060
(71) Applicant: YAMAHA HATSUDOKI KABUSHIKI KAISHA, Iwata-shi Shizuoka-ken (JP)
(72) Inventor: Ono, Tomohiro, Iwata-shi Shizuoka-ken (JP); Terada, Junji, Iwata-shi Shizuoka-ken (JP); Kurosawa, Atsushi, Iwata-shi Shizuoka-ken (JP); Sasaki, Koushi, Iwata-shi Shizuoka-ken (JP); Yagi, Hiroaki, Iwata-shi Shizuoka-ken (JP)
(74) Representative: Grünecker, Kinkeldey, Stockmair & Schwanhäusser Anwaltssozietät

(57) **Abstract**

The invention aims to provide an electric vehicle capable of carrying out a control in boosting and stalled states. Therefore, an electric vehicle is presented, comprising an electric motor for driving a wheel and a motor control unit, wherein said motor control unit comprises a first determining section capable of determining that the electric motor current is in a boosting state, a second determining section capable of determining that the electric motor is in a stalled state, and a motor current control section capable of applying a boosting current to the electric motor, when the electric motor current is in a boosting state and the electric motor is in a stalled state.

## Description

The present invention relates to an electric vehicle comprising an electric motor for driving a wheel and a motor control unit.

Japanese Patent No. 3106853 discloses an electric vehicle, wherein a control technology is comprised for the control of the vehicle in a stalled state, meaning in a state when the motor is not rotating despite a motor current flowing through the motor. This may be the case when the vehicle is being driven up a steep uphill street. This control technology does not work effectively in most driving situations, however.

Therefore, it is an object of the invention to provide an electric vehicle having an improved driving performance, in particular in boosting and stalled states, such as for example during a starting up situation.

This object is solved in an inventive manner by an electric vehicle comprising an electric motor for driving a wheel and a motor control unit, wherein said motor control unit comprises a first determining section capable of determining that the electric motor current is in a boosting state, a second determining section capable of determining that the electric motor is in a stalled state, and a motor current control section capable of applying a boosting current to the electric motor, when the electric motor current is in a boosting state and the electric motor is in a stalled state.

By being capable of detecting a stalled state and applying a boosting current to the motor, the starting up performance can be greatly improved. Preferably, the boosting current applied to the electric motor is larger than a maximum motor current value which is applied to the electric motor at a full open position of a throttle of the electric vehicle.

According to a preferred embodiment, the first determining section determines that a boosting state is reached, when an electric motor current is equal or higher than a predetermined motor current and a vehicle speed is lower than a predetermined vehicle speed. Therein, the predetermined motor current is equal to or higher than a motor current value corresponding to a full open position of the throttle for regulating the motor current.

Additionally, the second determining section determines that the electric motor is in a stalled state, when a revolution of the motor is below a predetermined revolution value while a motor current is flowing through the motor.

More preferably, the second determining section determines that the electric motor is in a stalled state, when the motor is not rotating despite a motor current flowing through the motor.

In such embodiments, the second determining section is connected to an encoder for determining a revolution of the electric motor.

Further, according to another embodiment, the motor control unit comprises a third determining section capable of determining that a boosting current has been applied to the electric motor for a time period being equal to or larger than a time threshold. Moreover, the motor control unit reduces the boosting current to a motor current value being equal to or lower than a preset limit current value, after the time threshold has elapsed. Preferably, the third determining section is connected to a timing device.

Further preferred embodiments of the invention are subject to the subclaims.

In the following, the invention will be explained in greater detail by means of several embodiments thereof in conjunction with the accompanying drawings, wherein:
- Fig. 1: is a side view of an electric motor cycle to which the invention is applied;
- Fig. 2: is a diagram showing a time-motor current characteristic of an electric motor cycle 1; and
- Fig. 3: is a flowchart of a control of the electric motor cycle 1.

A mode for carrying out the invention will be explained in reference to the drawings as follows.

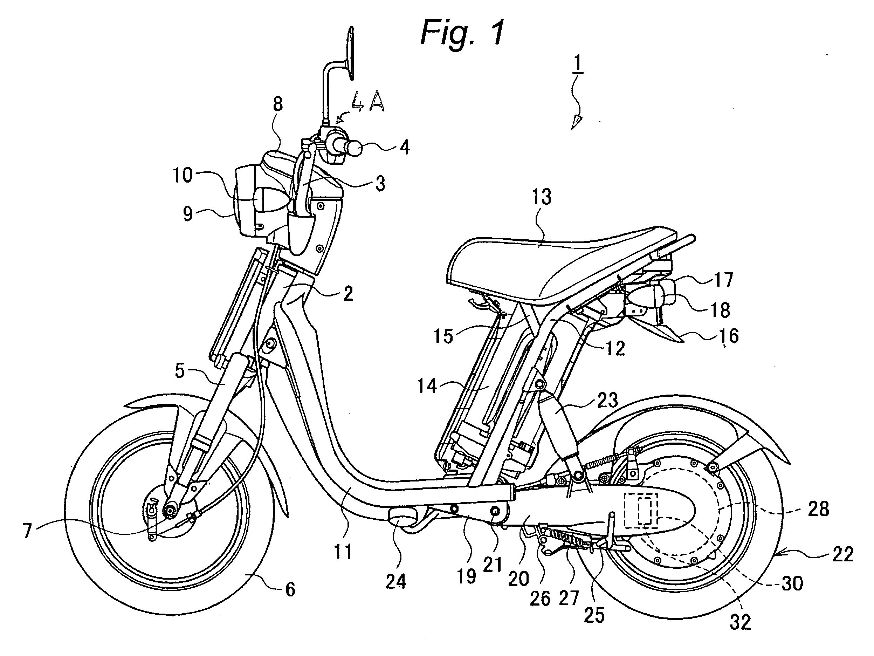

Fig. 1 is a side view of an electric motor cycle to which the invention is applied.

An electric motor cycle 1 shown in Fig. 1 is provided with a head pipe 2 at an upper front portion of a vehicle body thereof and a steering shaft, not illustrated, is pivotably inserted into the head pipe 2. Further, a handle 3 is attached to an upper end of the steering shaft. Both ends of the handle 3 are attached with grips 4 and one of the grips 4, preferably the one on the right side (depth side of Fig. 1), not illustrated, constitutes a pivotable throttle grip (hereinafter, described as throttle 4A).

A lower portion of the head pipe is attached with upper portions of a pair of left and right front forks 5, and a front wheel 6 is rotatably supported axially by a front wheel axle 7 at lower ends of the respective front forks 5. Further, a meter 8 is arranged above a center of the handle 3, a head lamp 9 is arranged on a lower side of the meter 8 and flasher lamps 10 (only one of them is illustrated in Fig. 1) are respectively provided on both sides thereof.

A pair of left and right vehicle body frames 11 are extended toward a rear side of the vehicle body. That is, the vehicle body frame 11 is constituted by a shape of a round pipe, extended from the head pipe 2 to the rear side of the vehicle body in a skewed lower direction and thereafter, bent in a circular ark shape to the rear side and extended substantially horizontally to the rear side of the vehicle body. A pair of left and right vehicle body frames 12 are extended from rear end portions of the respective vehicle body frames 11 in a skewed upper direction and connected to each other on a rear side of a seat 13. A battery 14 is arranged between the pair of left and right vehicle body frames 12.

Meanwhile, a seat stay (not illustrated) of an inverse U-shape is connected to the left and right vehicle body frames 12 and supported by a pair of left and right stays 15 (only one of them is illustrated). The seat 13 is arranged at the seat stay openably and closably.

Further, a tail lamp 17 is attached to a rear face of a rear fender 16 attached to rear ends of the vehicle body frames 12 and flasher lamps 18 (only one of them is illustrated) are arranged on left and right thereof.

Meanwhile, a pair of left and right rear arm brackets 19 (only one of them is illustrated) are respectively welded to the rear end portions of the left and right vehicle body frames 11, and front ends of rear arms 20 are supported by the rear arm brackets 19 rockably (pivotably) by a pivot shaft 21. Further, a rear wheel 22 which is a drive wheel is rotatably supported axially by rear ends of the rear arms 20 and the rear arms 20 and the rear wheel 22 are suspended from the vehicle body frames 12 by rear cushions 23.

Further, foot steps 24 (only one of them is illustrated) are respectively attached to lower sides of the left and right vehicle body frames 11, lower portions of the rear arms 20 are pivotably provided with side stands 25 axially by a shaft 26 and the side stands 25 are urged in a closing side by a return spring 27.

An electric motor 28 of a thin axial gap type which is flat in a vehicle width direction is contained at substantially circular portions of rear ends of the rear arms 20. Further, contiguous to the electric motor 28, an electric motor control unit 30 for controlling the electric motor 28 and an encoder 32 for detecting a rotational position of a rotor of the electric motor 28 are contained.

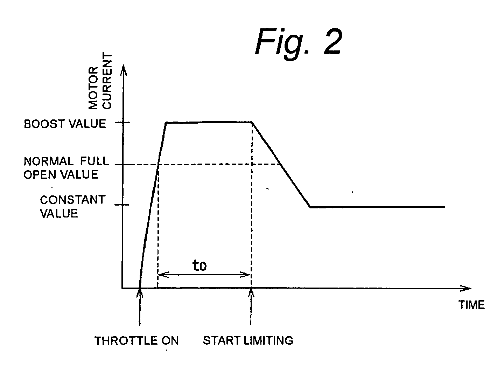

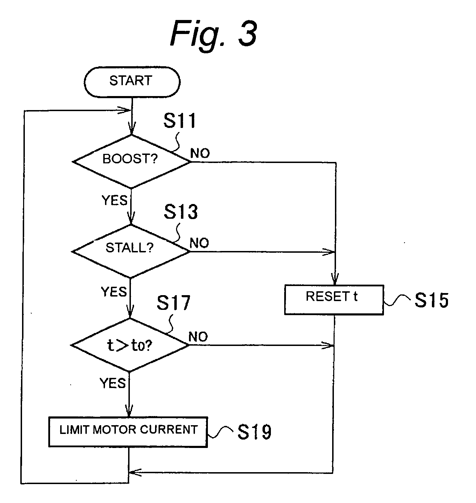

Fig. 2 is a diagram showing a time-motor current characteristic of the electric motor cycle 1. Fig. 3 is a flowchart of a control of the electric motor cycle 1.

According to the electric motor cycle 1, when a throttle is fully opened, for example, from when the electric motor cycle 1 is stationary, current of the electric motor 28 (motor) is increased to accelerate the motorcycle. When the throttle is made to stay to be fully opened, a motor current is increased by the motor control unit until reaching a boost value if the motor current is equal to or higher than a normal value (normal full open value) and the vehicle speed is under a predetermined figure.

Therefore, the electric motor cycle 1 is accelerated more quickly and more reliably than at normal time. Further, when the vehicle speed goes beyond a predetermined value, the motor current is returned to the normal value while throttle is kept fully open so that power consumption by wasteful acceleration can be prevented.

The electric motor cycle 1 enabling to carry out boosting in this way constantly executes the control of Fig. 3. Further, the control unit of the electric motor cycle 1 includes a timer which increases its count with an elapse of time (hereinafter, timer) and has a threshold t0 (> 0 second) of the elapsed time period and a limit value Im0 (< normal full open value) of the motor current set.

First, it is determined by a first determining section of the control unit whether the motor current is within a boosting region (step S11). When the determination is NO, a value t of the timer is reset (step S15) and the process returns to step S11. Meanwhile, when the determination is YES, it is determined by a second determining section whether or not a stalled state exists (a state in which the motor is not rotated although the motor current flows) or not (step S13). When the determination is NO, the value t of the timer is reset (step S15) and the process returns to step S11. The encoder may be used in connection with this determination.

Further, the state in which the motor is not rotated, means that the revolution of the motor is equal to or smaller than a lowest predetermined revolution value and does not strictly mean that the motor is not rotated.

When the determination is YES at steps S11 and S13, a third determining section of the control unit determines whether the value t of the timer is equal to or larger than preset time threshold t0 (step S17). When the determination is NO (less than t0), the operation returns to step S11. When the determination is YES at steps S11, S13 and S17, control is executed to make the motor current equal to or lower than a limit value Im0 (step S19). The timer is connected to or comprised by the third determining section of the control unit.

As has been explained above, according to the electric motor cycle 1, there can be provided an electric vehicle capable of carrying out the control in the boosting and stalled states. Further, a fast response which cannot be achieved by detecting temperature of the electric motor 28 or an inverter for driving the electric motor 28 is achieved. The respective determining sections may be incorporated as portions or routines of the control unit comprising a control program or structure like shown in Fig. 3.

As described above, an electric vehicle is capable of controlling the boosting and stalled states, by detecting that there is a boosting state and the electric motor is not rotated, and that a predetermined time period has elapsed since the detection, and controlling, after the detection, the current value of the electric motor to be equal to or smaller than the current value determined to be smaller than the current value at the normal full throttle time.

With such an electric vehicle as described above, it is possible to carry out boosting for making motor current larger than that in normal time in rapid acceleration. It is further possible to carry out a control in boosting and stalled states.

In other words, there is provided an electric vehicle including an electric motor for driving a wheel and capable of carrying out boosting for making a current value of the electric motor larger than a current value at normal full throttle time, therein detecting that the boosting is carried out and the electric motor is not rotated, detecting that a predetermined time period has elapsed since the detection, and after the detection controlling the current value of the electric motor to be equal to or smaller than a current value determined to be smaller than the current value at the normal full throttle time.

Therein, it is detected that boosting is carried out and an electric motor is not rotated, and that a predetermined time period has elapsed since the detection, and a current value of the electric motor is controlled to be equal to or smaller than a current value determined to be smaller than a current value at normal full throttle time after the detection.

## Claims

1. An electric vehicle comprising an electric motor (28) for driving a wheel (22) and a motor control unit (30), wherein said motor control unit (30) comprises:
- a first determining section (S11) capable of determining that the electric motor current is in a boosting state,
- a second determining section (S12) capable of determining that the electric motor (28) is in a stalled state, and
- a motor current control section capable of applying a boosting current to the electric motor (28), when the electric motor current is in a boosting state and the electric motor (28) is in a stalled state.

2. Electric vehicle according to claim 1, **characterized in that** the boosting current applied to the electric motor (28) is larger than a maximum motor current value which is applied to the electric motor (28) at a full open position of a throttle (4A) of the electric vehicle.

3. Electric vehicle according to claim 1 or 2, **characterized in that** the first determining section (S11) determines that a boosting state is reached, when an electric motor current is equal or higher than a predetermined motor current and a vehicle speed is lower than a predetermined vehicle speed.

4. Electric vehicle according to claim 3, **characterized in that** the predetermined motor current is equal to or higher than a motor current value corresponding to a full open position of the throttle (4A) for regulating the motor current.

5. Electric vehicle according to at least one of the claims 1 to 4, **characterized in that** the second determining section (S13) determines that the electric motor (28) is in a stalled state, when a revolution of the motor (28) is below a predetermined revolution value while a motor current is flowing through the motor (28).

6. Electric vehicle according to at least one of the claims 1 to 5, **characterized in that** the second determining section (S13) determines that the electric motor (28) is in a stalled state, when the motor (28) is not rotating despite a motor current is flowing through the motor (28).

7. Electric vehicle according to at least one of the claims 1 to 6, **characterized in that** the second determining section (S13) is connected to an encoder (32) for determining a revolution of the electric motor (28).

8. Electric vehicle according to at least one of the claims 1 to 7, **characterized in that** the motor control unit (30) comprises a third determining section (S17) capable of determining that a boosting current has been applied to the electric motor (28) for a time period (t) being equal to or larger than a time threshold (t0).

9. Electric vehicle according to claim 8, **characterized in that** the motor control unit (30) reduces the boosting current to a motor current value being equal to or lower than a preset limit current value (Im0), after the time threshold (t0) has elapsed.

10. Electric vehicle according to claim 8 or 9, **characterized in that** the third determining section (S17) is connected to a timing device.
